Europäisches Patentamt

European Patent Office

Office européen des brevets

(11) Publication number: **0 045 543**
**A1**

(12) **EUROPEAN PATENT APPLICATION**

(21) Application number: **81200819.1**

(22) Date of filing: **17.07.81**

(51) Int. Cl.³: **F 16 B 15/00**
**B 21 F 45/24**

(30) Priority: **01.08.80 NL 8004421**

(43) Date of publication of application:
**10.02.82 Bulletin 82/6**

(84) Designated Contracting States:
**AT BE CH DE FR GB IT LI LU NL SE**

(71) Applicant: **N.V. BEKAERT S.A.**
**Leo Bekaertstraat 1**
**B-8550 Zwevegem(BE)**

(72) Inventor: **Cosaert, Pierre**
**Lode de Boningestraat 34**
**B-8500 Kortrijk(BE)**

(74) Representative: **Lombaerts, Jozef et al,**
**N.V. Bekaert S.A. Leo Bekaertstraat 1**
**B-8550 Zwevegem(BE)**

(54) **Staple made of wire of concave cross-section.**

(57) Staple made of wire having a concave profile of the cross-section showing a thin central part (13) and elevated edges (14) and circumscribed by a convex rectangular pattern. The lower side is substantially linear and the upper side shows a cavity enclosed by said edges. The cavity (15) can amount to 10 % to 60 % of the circumscribing pattern. The staple bends more easily and shows advantages for adhesive connection. Wire suitable for such staples is covered by this invention.

FIG.2

EP 0 045 543 A1

## Staple made of wire of concave cross-section

The invention relates to an attaching element comparable
to a staple made of wire having a concave cross-section
and suitable for use in automatic stapling or stitching
devices in order to secure together objects made of
wood, paper, leather, cardboard or similar materials.
Such staples are commonly used in the building, printing, furniture or packing industries.

A staple is a short length of metal wire with rectangular
cross-section, bent into a U-shape and having two legs
preferably parallel before the staple is inserted into an
object. Staples are generally predeformed and adhesively
connected into strips for repetitive working of a stapler.

Some processing apparatuses use a continuous straight
wire and perform a cutting, bending and gluing operation
into a stick of attaching elements all at the same time.

Staples made of metallic wire with a hollow or concave
cross-section are already known from the French patent
No. 1.005.249, fig. 7 and its description. The advantages
of such a staple are weight savings, better anchoring of
the legs, better penetrative power (especially in wood)
a proportionally better kink resistance and less hitching
at the surface.

After bending such a wire into a staple, it was observed
that the edges tend to bend outwardly. This implies unequal friction in the guiding chamber of the stapler,
turning easily into jamming of the stapling apparatus.
It was also observed that these staples cannot be joined
easily by adhesives, the sidelong contact surface being
too small. The use of adhesives is relatively high and the staple sticks easily break.

The invention concerns a staple that shows the important advantages and not the disadvantages of the known staple and which is made of a wire with a concave cross-sectional profile.

These wire profiles are usually obtained by cold pressing or rolling of round wire so that the smallest convex circumscribing pattern shows a more or less oblong cross section with rounded edges. The width of this profile is several times its thickness, the biggest proportion being about eight to one. Such a profile behaves in a stabler way when bent into a U-shaped staple and particularly when the proportion is between two and five to one.

A similar profile can also be obtained by bending the edges of a very thin strip inwardly. This requires of course exceptional accuracy of the manufacturing unit. The lower side of the profile is the inward side of the bent staple, the upper side is the exterior side of the staple.

The cross-section of the wire of which the staple is made, is concavely profiled according to the invention and has a thin central part and elevated edges, the lower side being substantially rectilinear and the upper showing a cavity limited by said edges. This profile does not twist during bending.

The cavity in the cross-section which preferably amounts between 10 and 60 % of the total area of the smallest circumscribing convex pattern.

It is advantageous when a flat strip with upwardly bent edges is used to give the edge an inward slope. The angle between the edges and the central part, all having the same thickness, is preferably between 75° and 90°.

The exclusive right applied for also covers continuous wire with indefinite length intended for the manufacture of staples with cross-sections in accordance with the invention. Such wire is cut into length, bent and used by the user in suitable devices.

Sufficient ductility is required in order to allow the bending operation. An existing specification requires a minimum level of 3 % total elongation after break in the tensile test of regular wires.

The edges of the staples according to the invention tend to incline inwardly at the position where the staple legs are bent. The ductility requirement therefore becomes less stringent so that e.g. in the case of mild steel a higher amount of cold deformation can be allowed. A more important specific strength can be achieved in an economical way and the play between the staple and the stapler guides can be reduced so that a more reliable operation is obtained.

A preferred embodiment of the invention will now be described with reference to the accompanying drawings in which
Figure 1 is a cross-sectional view of a wire
Figure 2 is a longitudinal and cross-sectional view of a U-shaped staple.

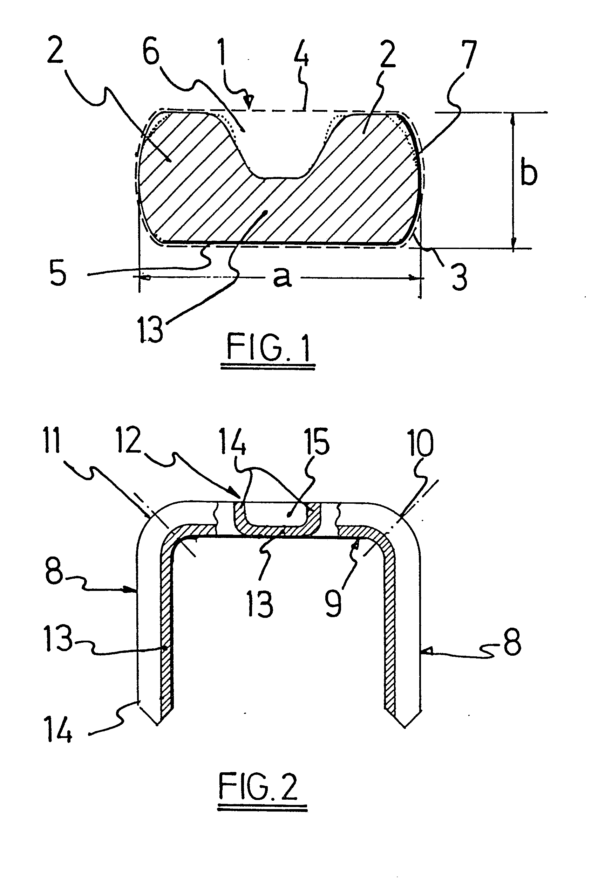

Figure 1 is a concave cross-section of a wire suitable for the manufacture of staples according to the invention. The profiled pattern 1 shows a central part 13 and elevated edges 2 around a cavity 6. The dashed line 3 is the smallest circumscribing and convex pattern of the cross-section in which the sections 4 and 5 represent upper and lower line limits for the anvils performing the bending operation. The pattern 1 has a width a and a thickness b, whose dimensions meet the proportion 2,1 to 2. The edges 2 will slightly incline towards the cavity 6 on the position of the bend as indicated by the dotted line 7. The cavity in this example is about 15 % of the convex pattern of circumscribing line 3. The substantial linearity of stretch 5 means that the line connecting the corners of the pattern comply with line 3.

In order to be economical, the saving in linear weight must be at least 5 % and preferably more than 10 %. For technical reasons, it is difficult but not impossible to reach 20 % in this kind of profiles unless in the case of very thin strips which can be folded in the transverse direction.

Figure 2 is an illustration of this kind of a staple. The longitudinal section shows a staple with two parallel legs 8 and a connecting member 9. The corners 10 and 11 are more or less rounded. The cross-section 12 shows a very thin strip folded in a U-shape. The central part 13 has the same thickness as the edges 14. In this case, the cavity 15 is about 55 % of the area of the smallest circumscribing convex pattern. The edges 14 can also be inclined slightly inwardly under an angle of about 75° to 90°. When bending the staple, the edges are further pressed down.

The staples according to the invention should preferably allow an attaching connection by the plastic deformation of the staple. This is not the case in wooden material and its use is merely based on an improved pull-out force.

Regularly wire of cold drawn rolled or swaged mild steel is used for making these staples, but also non-ferrous metals as Cu, Al and their alloys are applicable as well as appropriate manufacturing methods, like moulding or powder metallurgy in order to obtain wire-like objects.

The annexed table lists some properties obtained from tests on several mild steel wire profiles A - B - C - D - E. A, B and E represent regular convex and rectangular profiles. The cross-section of C is similar to figure 1 and the cross-section of D has a cavity at the underside of the profile.

A, B, C and D are made of cold-drawn and rolled low-carbon steel (0.06 % C). E is made of mild unalloyed steel containing 0.18 % C.

Recorded properties are listed as

DIM. : dimensions of the convex profile

S     : actual cross-section

Fm    : load at rupture

Rm    : tensile strength

El    : elongation after rupture in % of a sample length of 100 mm.

TO    : toughness expressed as the number of folds from 0 to 90° and back on a sharp edge, when applicable with the cavity situated at the inside of the fold.

$TO_o$ : toughness similar to TO only for cases with outwardly directed cavity

BE    : the number of alternated bendings over 180° on a radius of 2,5 mm

T     : number of torsions on a sample length of 200 times the smallest size of the circumscribing convex pattern.

M     : is proportional to the highest load required to deform the wire plastically in a three-point-bending test. The cavity is placed to the most deformed fibre of the sample when applicable.

$M_o$ : similar to M with the cavity at the least deformed side of the sample.

These test results illustrate that profiled wires according to the invention have a bending moment which is low against convex profiles and that the number of bends and torsions stays at a sufficient level. The toughness remains on an acceptable level.

Wires corresponding to the present description and profiled as shown in figure 1 have been used successfully for staple connections of cardboard boxes.

A number of 50 wires of 2,32 mm by 0,89 mm were adhesively connected side by side in a continuous way into a strip of 116 mm width. After drying this strip was cut into small lengths corresponding to the amount of wire needed for a staple. This strip length was then bent into a U-shape and a stick of 50 staples ready for use was obtained.

Comparatively the same strip was used upside down in order to manufacture staples with an inside cavity. It happened that due to bending effects the width of the strip increased from 116 mm to 125 mm which corresponds to an average increase of the wire dimension in the folds from 2,32 mm to 2,50 mm. The sticks were often split into several pieces or they obtained an arched appearance which made them unsuitable for stapler loading. Similar problems occurred in single wire processes for making staple sticks. The amount of power and energy needed to realize the bending was also higher so that the risk for surface scratches was increased.

| | DIM mm | S mm$^2$ | F$_m$ N | R$_m$ N/mm$^2$ | El % | TO | TO$_o$ | BE | T | M | M$_o$ |
|---|---|---|---|---|---|---|---|---|---|---|---|
| A | 2,2475 x 0,89 | 1,890 | 1060 | 561 | 1,2 | 4,5 | | 16 | 33 | 16,5 | |
| B | 2,285 x 0,95 | 2,046 | 1210 | 591 | 1,2 | 4,5 | | 14 | 29 | 19 | |
| C | 2,3D x 0,925 | 1,555 | 920 | 592 | 1,2 | 8 | 5,5 | 17 | 46 | 11 | 11 |
| D | 2,325 x 0,92 | 1,349 | 795 | 589 | 1 | 8,5 | 4 | 18 | 33 | 8,5 | 8 |
| E | 2,32 x 0,8975 | 1,970 | 2050 | 1040 | 2,8 | 2,5 | | 11 | 30 | 32 | |

0045543

Claims :

1. A staple made of wire having a concavely profiled cross-section (1) with a thin central part (13) and elevated edges (2) and with a substantially rectangular profile of the smallest circumscribing convex pattern (3) characterized in that the cross-section contains a substantially rectilinear lower side (5) and an upper side with a cavity (6) enclosed by said edges (2).

2. A staple according to claim 1, characterized in that the cavity amounts to between 10 % and 60 % of the total area of the smallest circumscribing convex pattern (3).

3. A staple according to claim 1 or 2, characterized in that the edges (2) and the central part (13) have an equal wall-thickness and mutually form an angle of about 75° to 90°.

4. A wire with a concavely profiled cross-section and suitable for the manufacture of staples according to one of the claims 1 through 3.

FIG.1

FIG.2

0045543

# EUROPEAN SEARCH REPORT

European Patent
Office

Application number

EP 81 20 0819

## DOCUMENTS CONSIDERED TO BE RELEVANT

| Category | Citation of document with indication, where appropriate, of relevant passages | Relevant to claim |
|---|---|---|
| D/A | FR - A - 1 005 249 (SIMON) | |
| A | FR - A - 2 159 045 (I.T.W.) | |

CLASSIFICATION OF THE APPLICATION (Int. Cl.³)

F 16 B 15/00
B 21 F 45/24

TECHNICAL FIELDS SEARCHED (Int. Cl.³)

B 21 D
B 21 F
F 16 B

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-11-1981 | VAN DER WAL |

EPO Form 1503.1    06.78